**Europäisches Patentamt**

(19) **European Patent Office**

**Office européen des brevets**

(11) Numéro de publication: **0 091 369**
**B1**

(12) **FASCICULE DE BREVET EUROPEEN**

(45) Date de publication du fascicule du brevet:
**25.06.86**

(21) Numéro de dépôt: **83400674.4**

(22) Date de dépôt: **31.03.83**

(51) Int. Cl.⁴: **A 23 J 1/20,** A 23 C 9/146,
A 23 C 19/05

(54) **Procédé et installation de préparation de caséinates acides.**

(30) Priorité: **01.04.82 FR 8205642**

(43) Date de publication de la demande:
**12.10.83 Bulletin 83/41**

(45) Mention de la délivrance du brevet:
**25.06.86 Bulletin 86/26**

(84) Etats contractants désignés:
**AT BE CH DE GB IT LI LU NL SE**

(56) Documents cités:
**EP - A - 0 038 732**

*Dictionnaire laitier (1981), p. 21*

(73) Titulaire: **LAITERIES HUBERT TRIBALLAT, Rians,
F-18220 Les Aix D'Angillon (FR)**

(72) Inventeur: **Bolzer, René, La Croix Rouge, F-35530 Brece
(FR)**
Inventeur: **Boulle, Michel, 22, Avenue du Soleil,
F-33120 Arcachon (FR)**

(74) Mandataire: **Ayache, Monique et al, CABINET
PLASSERAUD 84, rue d'Amsterdam, F-75009 Paris (FR)**

## Description

La présente invention est relative aux procédés et installations de préparation de caséinates acides à partir du lait.

Quand on ajoute à du lait de l'acide, en une quantité suffisante pour amener le pH à 4,6 environ, on atteint le point isoélectrique où la caséine coagule et se sépare du lactosérum.

Une solution à ce problème a été proposée dans la demande de brevet EP 38732. Cette solution consiste essentiellement, pour acidifier le lait à un pH inférieur au point isoélectrique, à le mettre au contact d'une résine échangeuse de cations sous forme acide, à une température de 0 à 4 °C, de préférence de 0 à 2 °C. En raison du refroidissement nécessaire, cette solution est d'une mise en œuvre compliquée et coûteuse, difficilement utilisable sur le plan industriel.

L'invention propose un procédé de préparation d'un caséinate acide, dont le pH est nettement inférieur à 4,5 et qui, sans être un liquide homogène comme le lait à pH supérieur à 6 reste, bien qu'ayant subi une réaction déstabilisant les micelles de phosphocaséinate de calcium, une solution colloïdale, contenant les micelles de caséinate acide dont les caractéristiques physiques, quoiqu'un peu différentes de celles du lait, permettent néanmoins d'effectuer les traitements ultérieurs requis, notamment ceux qui aboutissent à l'extraction industrielle de la caséine entière, d'une manière simple et efficace, sans que jamais, au cours de l'ensemble du processus établi de transformation du lait en caséine, il ne soit nécessaire de refroidir du lait à basse température, avec les frais considérables qui accompagnent ce refroidissement. En outre, le procédé suivant l'invention se prête facilement à une mise en œuvre en continu à l'échelle industrielle.

Le procédé suivant l'invention comprend l'étape consistant essentiellement à préparer un liquide acide à base de lait, ayant un pH inférieur à 3,5 environ par mise en contact d'une quantité de liquide miscible à l'eau, servant de volant de pH, à un pH inférieur à 3,5 environ avec une quantité de lait telle que le pH de l'ensemble reste inférieur à 3,5 environ. Cette mise en contact est effectuée sans refroidissement, dans des conditions d'agitation telles qu'il ne se produise pratiquement pas de coagulation pendant toute la durée de ladite étape.

On a en effet constaté que, dans ces conditions, le lait, ajouté au volant de pH, diffuse rapidement dans celui-ci et prend rapidement un pH inférieur à 3,5 sans qu'apparaisse un phénomène gênant de coagulation. On dispose ainsi d'un liquide suffisamment homogène pour le transporter sans difficulté vers d'autres stades de traitement ou le séparer de billes de résine en suspension, lorsque l'acidification est produite par un échangeur d'ions.

De préférence, le volant de pH a un pH inférieur à 2,5 environ. On fait en sorte que le pH de l'ensemble des deux quantités réunies soit inférieur à 3,5 environ pour rester à distance de la limite inférieure du domaine de pH allant de 4 à 5 environ où la coagulation se produit d'une manière intense à la température ambiante à laquelle on peut effectuer le procédé suivant l'invention. La quantité de lait ajoutée dépend de la quantité de liquide miscible servant de volant de pH et du pH de cette quantité de liquide miscible. Comme liquide miscible à l'eau servant de volant initial de pH, on peut faire appel notamment à du lait acide, à du caséinate acide ou à une autre matière lactée acide et même, initialement, à de l'eau acidulée.

Suivant une variante, le procédé consiste à ajouter la quantité de lait en présence d'une masse de résine cationique sous forme H ou d'une quantité de matière acide telle que le pH de l'ensemble des deux quantités réunies, en présence de la masse de résine ou de la quantité de matière acide, reste inférieur à 3,5. On rétablit ainsi au fur et à mesure l'acidité du volant que l'addition de lait tend à faire diminuer.

Suivant un perfectionnement, le procédé consiste à ajouter la quantité de lait en continu et à ajouter de la matière acide (ou de la résine) en continu en une quantité (ou en une masse ayant une capacité d'échange ionique) sensiblement au moins égale à celle qui serait nécessaire pour amener, sans le secours du volant de pH, le pH de la quantité de lait à 3,5 environ. Alors que dans une phase initiale temporaire de démarrage, le volant de liquide miscible est constitué par un liquide étranger au processus, assez rapidement le processus atteint un mode de fonctionnement stationnaire où c'est le caséinate acide lui-même qui sert à constituer le volant, le liquide étranger s'évacuant peu après le démarrage et ne servant qu'à l'amorçage du processus. Au demeurant, ce liquide étranger peut être constitué de caséinate acide d'une campagne précédente de production.

Il est avantageux de prévoir une addition de résine cationique en suspension pour obtenir une décationisation plus poussée du lactosérum, cependant que l'addition d'une solution d'acide classique, tel que chlorhydrique, sulfurique ou lactique, est plus simple à effectuer et plus conforme aux traditions laitières.

Suivant un perfectionnement, d'un grand intérêt industriel parce que s'effectuant en continu, le procédé consiste à soutirer en continu une quantité de l'ensemble sensiblement égale à la somme de la quantité de lait ajoutée et à la quantité de matière acide ajoutée et, le cas échéant, une masse de résine sensiblement égale à celle qui est ajoutée.

De préférence, les débits d'addition et de soutirage et la quantité de liquide servant de volant de pH sont tels que le temps de séjour moyen de la quantité de lait avec la quantité de liquide servant de volant de pH soit compris entre 10 minutes et 60 minutes environ.

On peut aussi préparer la quantité de liquide miscible servant de volant initial de pH en maintenant sous agitation du lait et l'élément acidifiant qui peut être une résine cationique jusqu'à ce que le pH devienne inférieur à 3,5 environ. Une agitation suffisamment intense peut en effet suffire à empêcher que la coagulation ne prenne des proportions trop importantes avant que le caséinate acide n'ait un pH de 3,5 environ.

L'invention vise également une installation pour la mise en œuvre en continu du procédé qui comprend une cuve ayant deux conduits d'entrée et un conduit de sortie opposé à l'un des conduits d'entrée, une colonne de résine cationique communiquant avec la cuve par les deux conduits opposés et un dispositif monté sur le conduit d'entrée opposé pour dériver vers un conduit d'évacuation une partie du liquide qui y passe.

Cette installation présente l'avantage, jamais réalisé jusqu'ici, d'opérer en continu avec un lit fixe de résine, séparé du volant de pH. Il est très facile de passer à un autre lit de résine quand le premier est épuisé.

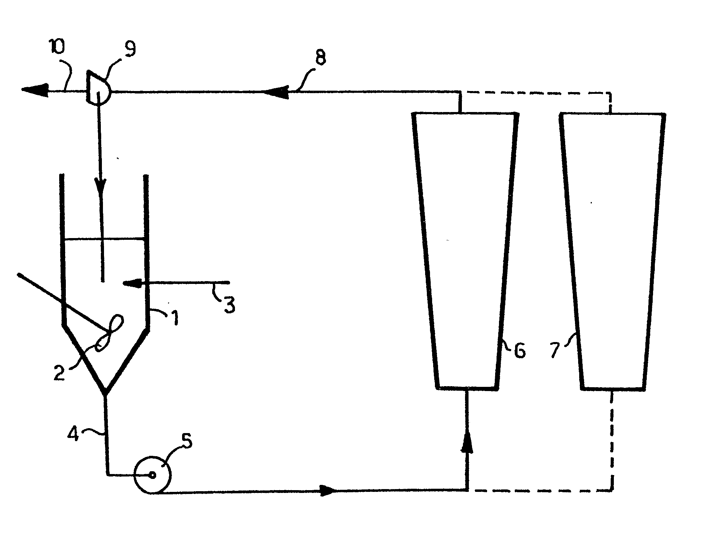

La figure unique du dessin annexé illustre cette installation.

De la cuve 1 à fond conique, munie d'un agitateur 2 vers le bas, débouchent, à mi-hauteur, un conduit 3 pour l'amenée de lait frais et, du bas, un conduit 4 de sortie menant par une pompe 5 au bas de deux colonnes 6, 7 de résine pouvant être mises en service alternativement.

Au sommet de la cuve 1 débouche un conduit 8 provenant du sommet des colonnes 6, 7. Sur le conduit 8 est monté un dispositif 9 permettant de dériver une partie du liquide qui y passe dans un conduit 10 d'évacuation allant à la fabrication de la caséine.

Le caséinate acide contenu dans la cuve 1 sert de volant de pH. Le lait frais arrivant par le conduit 3 dans la cuve 1 se transforme en caséinate acide, le pH dans la cuve restant stationnaire à la valeur de consigne. L'ensemble du caséinate acide est envoyé sur l'une des colonnes 6, 7 par le conduit 4 et par la pompe 5. Il en ressort par le conduit 8 en ayant un pH un peu inférieur à la valeur de consigne, l'écart étant dépendant de l'état de la résine et de la vitesse de passage du lait dans la résine. Une partie de ce caséinate très acide sert à maintenir le pH dans la cuve 1, tandis que l'autre partie va à la fabrication de caséine par le conduit 10.

Dans une autre variante, on peut fixer la consigne pour le pH du caséinate acide sortant de la cuve de résine.

Les exemples suivants illustrent l'invention.

Exemple 1

On dispose d'une cuve à fond conique munie d'un agitateur disperseur et d'un pH mètre, dans laquelle on a introduit 10 m³ de lait écrémé à 12 °C à pH 6,7.

On met l'agitateur en route.

On introduit, sans précaution particulière, des billes de résine Duolite C26 régénérée, au débit approximatif de 100 litres par minute.

On observe que le pH du mélange s'abaisse progressivement pour atteindre environ pH 3 en 17 minutes; à pH 3 on arrête l'introduction de résine et l'on observe que la valeur du pH se stabilise progressivement au voisinage de 2,7 après 30 minutes.

A aucun moment, dans les conditions de l'expérience, la réaction n'a fait apparaître de phénomène de coagulation.

Immédiatement après la stabilisation du pH, les billes de résine et de caséinate acide sont séparées sur filtre vibrant.

La consommation de résine a été de 1150 litres environ.

Exemple 2

On dispose d'une cuve munie d'un agitateur et d'un pH mètre à seuil, dont le point de consigne est réglé à 2,8, dans laquelle on a introduit 5 m³ de caséinate acide à température de 14 °C et pH 2,8.

On met l'agitateur en route.

On introduit à débit constant de 0,3 litre/seconde environ, des billes de résine Duolite C26 régénérée, sous contrôle automatique du pH mètre qui autorise ou arrête cette introduction.

Simultanément, on introduit du lait écrémé à température de 12 °C à pH 6,6, au débit moyen de 8 m³/heure, plus précisément contrôlé par un robinet piloté par un flotteur pour maintenir constant le niveau du mélange.

Simultanément, on soutire à débit constant de 8 m³/heure le mélange de caséinate acide et de résine par l'orifice du fond de cuve.

Il s'établit instantanément un régime stationnaire caractéristique de fonctionnement en continu, tel qu'automatiquement la quantité de résine introduite compense le besoin d'ions $H^+$ correspondant à l'échange de lait écrémé et de caséinate acide à pH constant.

Dans cette expérience, la réserve de résine de 3000 litres a été épuisée en 3 heures et 25 minutes, tandis que le volume de caséinate acide extrait dans le même temps était de 27 260 litres.

Comme dans l'exemple précédent, les billes de résine sont facilement séparées du caséinate acide sur le tamis d'un filtre vibrant.

Exemple 3

On dispose d'une colonne de verre Pyrex de 40 mm de diamètre et de 600 mm de hauteur, d'un réservoir annexe muni d'un pH mètre, et d'une pompe à vitesse variable.

La base et le sommet de cette colonne sont partiellement fermés par un tamis d'acier inoxydable dont les mailles ont une taille de 0,2 mm.

On a introduit dans la colonne 15 cl de résine Duolite C26 occupant 20% de sa hauteur et dans le réservoir annexe 150 cl de lait écrémé à 18 °C.

Dans une première phase de l'expérience à l'aide de la pompe, on établit un circuit d'eau pour provoquer la mise en suspension de la résine à débit tel que la vitesse moyenne verticale de l'eau dans la colonne soit comprise entre 50 et 100 m/h.

Dès que le régime est stable, on met le lait en circulation, d'abord pour brasser l'eau des canalisations et de la colonne, puis on ferme le circuit de retour du réservoir.

On observe alors que, dans ces conditions, sans phénomène visible de coagulation, le pH du réservoir s'abaisse au voisinage de 4 en 2 minutes et se stabilise vers 3,1 en 7 minutes.

Exemple 4

On dispose d'une cuve à fond conique munie d'un agitateur et d'un pH mètre, dans laquelle on a stocké 4 m³ de caséinate acide à température de 10 °C et pH 2, obtenu selon une procédure semblable à celle décrite dans l'exemple 1.

On dispose par ailleurs d'une colonne de 1,2 m de diamètre fermée en haut et en bas par des tamis dont la maille est de 0,2 mm contenant 3000 litres de résine Duolite C26 régénérée (le volume mort restant au-dessus de la résine essorée est de 1000 litres).

On dispose également d'une pompe centrifuge permettant de transférer la caséine acide à la base de la colonne et d'un circuit permettant le retour depuis le sommet de la colonne jusqu'à la cuve de caséinate acide.

On met en route la pompe centrifuge et l'on règle le débit de transfert à 8 m³/h environ; le caséinate acide traverse alors progressivement la masse de résine, puis revient vers la cuve.

Simultanément, on introduit dans la cuve du lait écrémé à 8 °C, pH 6,6, dont on règle le débit de manière à maintenir constant le pH du mélange au voisinage de 2,7.

Dans les conditions d'expérience le volume de caséinate acide au pH de 2,7 a atteint 15 m³ après 2 heures et 10 minutes de fonctionnement.

A aucun moment, on n'a observé de phénomène de coagulation.

## Revendications

1. Procédé de préparation d'un caséinate acide, qui comprend l'étape consistant essentiellement à préparer un liquide acide à base de lait, ayant un pH inférieur à 3,5 environ par mise en contact d'une quantité de liquide miscible à l'eau, servant de volant de pH, à un pH inférieur à 3,5 environ avec une quantité de lait telle que le pH de l'ensemble reste inférieur à 3,5 environ, caractérisé en ce que cette mise en contact est effectuée sans refroidissement, dans des conditions d'agitation telles qu'il ne se produise pratiquement pas de coagulation pendant toute la durée de ladite étape.

2. Procédé selon la revendication 1, caractérisé en ce que l'élément acidifiant du volant de pH est une résine cationique sous forme H.

3. Procédé selon la revendication 1, caractérisé en ce que le volant de pH est du lait acide, du caséinate acide ou une autre matière acide ou encore, dans un procédé en continu, initialement de l'eau acidulée.

4. Procédé selon la revendication 3, caractérisé en ce que l'eau acidulée est constituée d'une solution d'acide d'usage habituel dans l'industrie laitière, notamment d'acide chlorhydrique, sulfurique ou lactique.

5. Procédé selon l'une des revendications 1 à 4, caractérisé en ce qu'on ajoute du lait en continu et ajoute de la matière acide (ou de la résine) en continu en une quantité (ou en une masse ayant une capacité d'échange ionique) sensiblement au moins égale à celle qui serait nécessaire pour amener, sans le secours du volant de pH, le pH de la quantité de lait ajouté à 3,5 environ.

6. Procédé selon la revendication 5, caractérisé en ce qu'on soutire en continu une quantité de l'ensemble sensiblement égale à la somme de la quantité de lait ajoutée et à la quantité de matière acide ajoutée ou, le cas échéant, une masse de résine sensiblement égale à celle qui est ajoutée.

7. Procédé selon la revendication 5 ou 6, caractérisé en ce qu'on utilise, comme matière acide, une partie du caséinate acide produit, ayant préalablement passé à travers un lit de résine cationique sous forme H distinct du volant de pH.

8. Procédé selon la revendication 6 ou 7, caractérisé en ce que les débits d'addition et de soutirage et la quantité de liquide servant de volant de pH, ou le cas échéant de la résine cationique, sont tels que le temps de séjour moyen de la quantité de lait avec la quantité de liquide servant de volant de pH soit compris entre 10 minutes et 60 minutes environ.

9. Installation pour la mise en œuvre du procédé suivant l'une des revendications 5 à 8, caractérisée en ce qu'elle comprend une cuve (1) munie d'un agitateur (2) et ayant deux conduits d'entrée et un conduit de sortie (4) opposé à l'un des conduits d'entrée, au moins une colonne de résine cationique acide (6, 7) communiquant avec la cuve par les deux conduits opposés et un dispositif (9) monté sur le conduit d'entrée opposé au conduit de sortie pour dériver vers un conduit d'évacuation (10) une partie du liquide qui y passe.

10. Procédé pour la fabrication en continu de caséinate acide selon l'une des revendications 5 à 8, caractérisé en ce qu'il comprend essentiellement l'étape consistant à introduire sous agitation (2) du lait frais par une conduite (3) dans une cuve (1) contenant un volant de pH, notamment du caséinate acide, dans des conditions telles que le pH dans la cuve (1) reste stationnaire à une valeur de consigne et qu'il ne se forme pratiquement pas de coagulation, à envoyer l'ensemble du caséinate acide dans une colonne de résine cationique acide (6, 7) pour abaisser son pH à une valeur inférieure à la valeur de consigne et à envoyer une partie du caséinate très acide obtenu vers la fabrication de caséine (10), l'autre partie étant renvoyée à la cuve (1) pour y maintenir le pH à une valeur de consigne.

## Patentansprüche

1. Verfahren zur Herstellung eines sauren Kaseinates, mit einer Stufe, die im wesentlichen aus der Vorbereitung einer sauren Flüssigkeit auf Milchbasis besteht, die einen pH-Wert niedriger als etwa 3,5 aufweist, wobei eine Menge an wassermischbarer Flüssigkeit, die als Regelmedium des pH-Wertes dient, mit einer derartigen Menge an Milch in Kontakt gebracht wird, dass der pH-Wert der gesamten Mischung unter etwa 3,5 bleibt, dadurch gekennzeichnet, dass dieses Inkontaktbringen ohne Abkühlung und unter derartigen Rührbedingungen erfolgt, dass während der gesamten Dauer der genannten Stufe praktisch kein Koagulieren auftritt.

2. Verfahren nach Anspruch 1, dadurch gekennzeichnet, dass das Ansäuerungsmittel des pH-Regelmediums ein Kationenaustauscherharz in H-Form ist.

3. Verfahren nach Anspruch 1, dadurch gekennzeichnet, dass das pH-Regelmedium aus saurer Milch, saurem Kaseinat oder einem anderen sauren Stoff oder auch, bei einem kontinuierlichen Verfahren, anfänglich aus gesäuertem Wasser besteht.

4. Verfahren nach Anspruch 3, dadurch gekennzeichnet, dass das gesäuerte Wasser aus einer üblicherweise in der Milchindustrie eingesetzten Säurelösung, insbesondere Salz-, Schwefel- oder Milchsäure, besteht.

5. Verfahren nach einem der Ansprüche 1 bis 4, dadurch gekennzeichnet, dass man kontinuierlich Milch und sauren Stoff (oder Harz) in einer Menge (oder in einer Masse mit Ionenaustauschkapazität) zugibt, die mindestens in etwa derjenigen entspricht, die notwendig wäre, um den pH-Wert der zugegebenen Menge Milch ohne Hilfe des pH-Regelmediums auf etwa 3,5 zu bringen.

6. Verfahren nach Anspruch 5, dadurch gekennzeichnet, dass man kontinuierlich eine Menge der gesamten Mischung abzieht, die in etwa der Summe der zugegebenen Menge Milch sowie der zugegebenen Menge an saurem Stoff entspricht oder dass man, gegebenenfalls, eine Masse Harz abzieht, die in etwa der entspricht, die zugegeben wird.

7. Verfahren nach Anspruch 5 oder 6, dadurch gekennzeichnet, dass man als sauren Stoff, einen Teil des hergestellten sauren Kaseinates verwendet, welcher vorher durch eine in H-Form befindliche Kationenaustauscherharzschicht geführt wird, wobei diese Schicht von dem pH-Regelmedium verschieden ist.

8. Verfahren nach Anspruch 6 oder 7, dadurch gekennzeichnet, dass die Zugabe- und Abzugdurchsätze und die Menge der als pH-Regelmedium eingesetzten Flüssigkeit, oder gegebenenfalls des Kationenharzes so gross sind, dass die durchschnittliche Weilzeit der Milchmenge mit der als pH-Regelmedium dienenden Flüssigkeit zwischen etwa 10 Minuten und 60 Minuten liegt.

9. Anlage zur Durchführung des Verfahrens nach einem der Ansprüche 5 bis 8, dadurch gekennzeichnet, dass sie eine Wanne (1) mit einem Rührwerk (2) umfasst mit zwei Einlaufleitungen und mit einer der Einlaufleitungen gegenüberliegenden Auslaufleitung (4), sowie zumindest eine saure Kationenaustauscherharzsäule (6, 7), die mit der Wanne mittels der zwei gegenüberliegenden Leitungen in Verbindung steht, und eine an der der Auslaufleitung gegenüberliegenden Einlaufleitung angeordnete Vorrichtung (9) zum Ableiten eines Teils der diese durchlaufenden Flüssigkeit zu einer Ablaufleitung (10).

10. Verfahren zur kontinuierlichen Herstellung von saurem Kaseinat nach einem der Ansprüche 5 bis 8, dadurch gekennzeichnet, dass es im wesentlichen die Stufe umfasst, die darin besteht, frische Milch unter Rühren (2) über eine Leitung (3) in eine Wanne (1) einzugeben, welche ein pH-Regelmedium enthält, insbesondere aus saurem Kaseinat, unter derartigen Bedingungen, dass der pH-Wert in der Wanne (1) zu einem Einstellwert stationär bleibt und, dass praktisch kein Koagulieren auftritt, wobei das gesamte saure Kaseinat in eine saure Kationenaustauscherharzsäule (6, 7) geführt wird zum Absenken seines pH-Wertes auf einen Wert der niedriger ist als der Einstellwert, und wobei ein Teil des erhaltenen sehr sauren Kaseinates der Kaseinherstellung (10) zugeführt wird, und der übrige Teil zur Wanne (1) zurückgeführt wird, um dort den pH-Wert auf einem Einstellwert zu halten.

**Claims**

1. A process for preparing an acid caseinate, which incorporates the step essentially consisting in preparing an acid liquid on the basis of milk, having a pH lower than 3.5 approximately by contacting an amount of water-miscible liquid, serving as pH-regulating medium, at a pH lower than 3.5 approximately, with an amount of milk such that the pH of the whole remains lower than 3.5 approximately, characterized in that this contacting is carried out without cooling, under stirring conditions such that practically no coagulation takes place for the whole duration of said step.

2. A process according to claim 1, characterized in that the acidifying element of the pH-regulating medium is a cationic resin in the H-form.

3. A process according to claim 1, characterized in tat the pH-regulating medium is acid milk, acid caseinate or another acid matter or further, in a continuous process, initially acidulated water.

4. A process according to claim 3, characterized in that the acidulated water is constituted by a solution of an acid usually resorted to in the dairy industry, particularly hydrochloric, sulfuric or lactic acid.

5. A process according to one of claims 1 to 4, characterized in that milk is continuously added and acid matter (or resin) is continuously added in an amount (or in a mass having an ion exchange capacity) substantially at least equal to the one which would be required in order to bring the pH of the amount of added milk to 3.5 approximately, without the help of the pH-regulating medium.

6. A process according to claim 5, characterized in that, one continuously draws off an amount of the whole which is substantially equal to the sum of the added amount of milk and of the added amount of acid matter or, as the case may be, a mass of resin substantially equal to the one which is added.

7. A process according to claim 5 or 6, characterized in that one uses, as acid matter, part of the acid caseinate produced, having previously been passed through a cationic resin bed in the H-form distinct from the pH-regulating medium.

8. A process according to claim 6 or 7, characterized in that the flowrates of addition and drawing off and the quantity of liquid used as pH-regulating medium, or as the case may be, of the cationic resin, are such that the average staying time of the amount of milk with the amount of liquid used as pH-regulating medium, is comprised between 10 minutes and 60 minutes approximately.

9. An installation for the implementation of the process according to one of claims 5 to 8, characterized in that it incorporates a vat (1) provided with a stirrer (2) and having two inlet pipes and one outlet pipe (4) opposite to one of the inlet pipes, at least an acid cationic resin column (6, 7) communicating with the vat via the two opposite pipes and a device (9) mounted on the inlet pipe opposite to the outlet pipe in order to bypass part of the liquid flowing through it toward a drain pipe (10).

10. A process for the continuous manufacture of acid caseinate according to one of claims 5 to 8, characterized in that it essentially incorporates the step consisting in introducing, under stirring (2), fresh milk via a pipe (3) into a vat (1) containing a pH-regulating medium, particularly acid caseinate, under conditions such that the pH in vat (1) remains stationary at a set value and that practically no coagulation is built up, sending the whole of the acid caseinate into an acid cationic resin column (6, 7) in order to reduce its pH to a value lower than the set value and sending part of the strongly acid caseinate obtained toward the casein production (10), the other part being returned to the vat (1) in order to maintain there the pH at a set value.

1/1